# EUROPÄISCHE PATENTSCHRIFT

(11) **EP 1 250 702 B1**
(45) Veröffentlichungstag und Bekanntmachung des Hinweises auf die Patenterteilung: **08.06.2005**
(21) Anmeldenummer: 01907356.8
(22) Anmeldetag: 15.01.2001
(51) Int. Cl.: G10L 15/26, G06F 3/00, G06F 3/16

(54) **SYSTEM UND VERFAHREN ZUR BLICKFOKUSSIERTEN SPRACHVERARBEITUNG MIT ERZEUGUNG EINES VISUELLEN FEEDBACKSIGNALS**
SYSTEM AND METHOD FOR EYE-TRACKING CONTROLLED SPEECH PROCESSING WITH GENERATION OF A VISUAL FEEDBACK SIGNAL
SYSTEME ET PROCEDE DE TRAITEMENT VOCAL A SUIVI OCULAIRE AVEC PRODUCTION D'UN SIGNAL DE RETROACTION VISUEL

(30) Priorität: 27.01.2000 DE 10003549
(43) Veröffentlichungstag der Anmeldung: 23.10.2002
(73) Patentinhaber: SIEMENS AKTIENGESELLSCHAFT, 80333 München (DE)
(72) Erfinder: FRIEDRICH, Wolfgang, 91088 Bubenreuth (DE); WOHLGEMUTH, Wolfgang, 91058 Erlangen (DE); YE, Xin, 91058 Erlangen (DE)
(86) Internationale Anmeldenummer: PCT/DE2001/000138
(87) Internationale Veröffentlichungsnummer: WO 2001/056018

(56) Entgegenhaltungen:
- EP-A- 0 718 823
- WO-A-93/14454
- US-A- 5 668 573
- US-A- 5 864 815

## Beschreibung

Die Erfindung betrifft ein System und ein Verfahren zum Bedienen- und Beobachten insbesondere eines Automatisierungssystems und/oder einer Produktions- und/oder Werkzeugmaschine.

Ein derartiges System und Verfahren kommt beispielsweise im Bereich der Automatisierungstechnik, bei.Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Ein Beispiel für ein derartiges System wird in der Patentschrift US-A-5668573 offenbart.

Der Erfindung liegt die Aufgabe zugrunde, ein System und ein Verfahren zum Bedienen- und Beobachten insbesondere eines Automatisierungssystems und/oder einer Produktions- und/oder Werkzeugmaschine anzugeben, das eine Freihandbedienung und die Möglichkeit für eine "Navigation" im Umfeld von Augmented-Reality-Anwendungen auch bei komplexen technischen Anlagen ermöglicht.

Diese Aufgabe wird durch ein System sowie durch ein Verfahren mit den in den Ansprüchen 1 bzw. 6 angegebenen Merkmalen gelöst.

Dabei wird mit Hilfe der Erfassungsmittel, beispielsweise einer Kamera das Blickfeld des Anwenders, das auf ein Anzeigemittel, beispielsweise einen Monitor gerichtet ist, erfasst. Gleichzeitig wird über die Spracherkennungsmittel die vom Anwender abgegebene Sprache ausgewertet. Die Erfassungsmittel und die Spracherkennungsmittel bilden dabei gemeinsam ein blickfokussiertes Spracherkennungssystem, wobei in Abhängigkeit der erkannten Sprachinformation und in Abhängigkeit des erfassten Blickfeldes auf den Anzeigemittel bestimmte vorgebbare Informationsdaten dargestellt werden. Wird beispielsweise mit Hilfe einer an den Anzeigemittel, beispielsweise an dem Bildschirm eingebauten Kamera, festgestellt, dass der Anwender gerade in den Bildschirm schaut und hierdurch einen entsprechenden Prozess beobachten will, so wird über die Kamera als Erfassungsmittel die Spracherkennung des Systems aktiviert, wodurch eine zielgerichtete Auswertung der Spracheingabe erfolgt. Hierdurch ergibt sich somit eine neue Interaktionsform für die Prozessvisualisierung. Richtet der Anwender seinen Blick auf ein weiteres Anzeigemittel oder auf ein anderes Blickfeld des Anzeigemittels, so kann mit Hilfe der Steuerungsmittel eine dem diesen Blickfeld zugeordnete Information nach erfolgreicher Spracherkennung auf den Anzeigemittel dargestellt werden. Hierdurch kann der Anwender freihändig per Sprache einen gewünschten Prozess oder eine gewünschte Produktions- und/oder Werkzeugmaschine intuitiv durch Änderung seines Blickfelds in Kombination mit Sprachsteuerung bedienen und beobachten. Das System weist dabei Mittel zur Generierung eines visuellen Feedbacksignals als Reaktion auf den Bearbeitungsstatus bezüglich erkannter Sprachinformation auf, wodurch eine sichere Information über den Verarbeitungszustand des Systems bezüglich eines Sprachsignals für den Anwender erzielt wird.

Eine vom Anwender leicht erkennbare Ausgestaltung für das Feedbacksignal besteht darin, dass das visuelle Feedbacksignal als im Bereich des detektierten Blickfeldes des Anwenders eingeblendetes Softwareobjekt ausgebildet ist.

Eine weitere Möglichkeit für ein deutlich auffälliges Feedback zur Unterstützung der Sprachinformation besteht darin, dass das visuelle Feedbacksignal als den jeweiligen Bearbeitungsstatus bezüglich erkannter Sprachinformation kennzeichnendes Farbsignal ausgebildet ist.

Eine unbeabsichtigte Erkennung und Interpretation einer nicht für das System bestimmten Sprachinformation bzw. eine gezielte Aktivierung der Spracherkennung kann dadurch erzielt werden, dass die Steuerungsmittel das System so ansteuern, dass die Spracherkennungsmittel erst dann aktiviert werden, wenn von den Erfassungsmitteln erfaßt wird, dass das Blickfeld des Anwenders ein bestimmtes Anzeigemittel und/oder zumindest vorgebbare Bereiche des Anzeigemittels betrifft.

Eine vorteilhafte Ausführungsform der Erfassungsmittel besteht darin, dass die Erfassungsmittel zur Erfassung des Blickfeldes des Anwenders eine Kamera aufweisen.

Eine interaktive Sprachkommunikation mit dem System kann dadurch sichergestellt werden, dass das System akustische Wiedergabemittel aufweist, die zur akustischen Wiedergabe von akustischen Informationsdaten als Reaktion auf vom Anwender gezielt über die Spracherkennungsmittel abgegebene Sprachinformation an die akustischen Wiedergabemittel übermittelt wird.

Eine zielgerichtete Verarbeitung der Sprache wird dadurch weiter verbessert, dass das System weitere Anzeigemittel aufweist, die zur Signalisierung des Ortes von mit einer erkannten Sprachinformation verknüpften Informationsdaten.

Im folgenden wird die Erfindung anhand der in den Figuren dargestellten Ausführungsbeispiele näher beschrieben und erläutert.

### Es zeigen:

- FIG 1: ein Blockschaltbild eines Ausführungsbeispiels eines sprachgesteuerten Systems zum Bedienen- und Beobachten eines Automatisierungssystems oder einer Werkzeugmaschine mit einem visuellen Feedbacksignal in Form eines Softwareobjekts und

- FIG 2: ein Blockschaltbild eines Ausführungsbeispiels eines sprachgesteuerten Systems zum Bedienen- und Beobachten eines Automatisierungssystems oder einer Werkzeugmaschine mit einem visuellen Feedbacksignal in Form einer optischen Einrichtung.

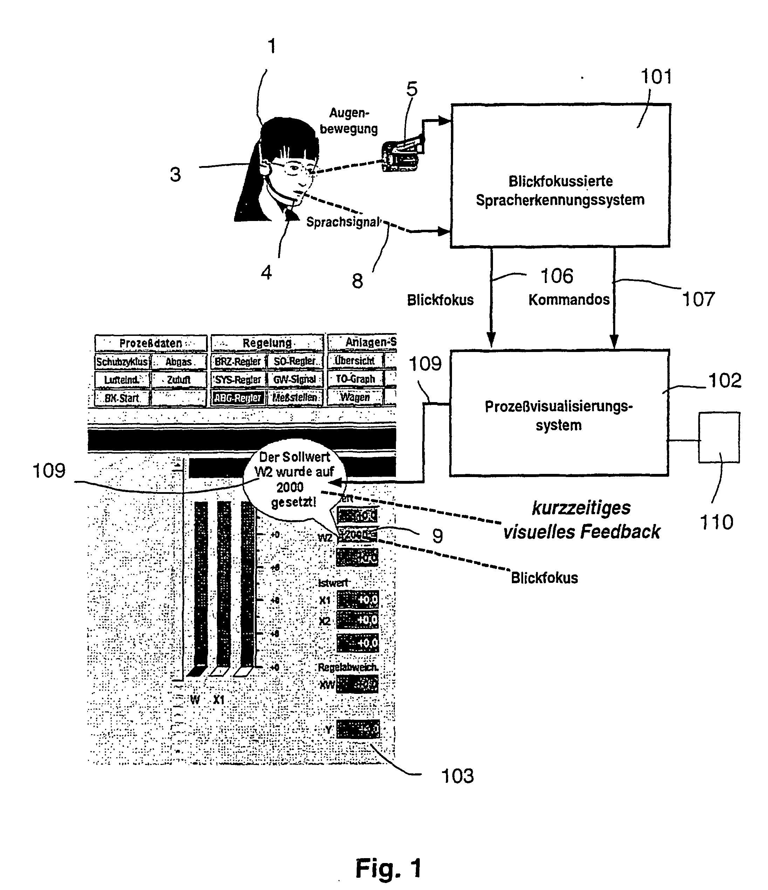

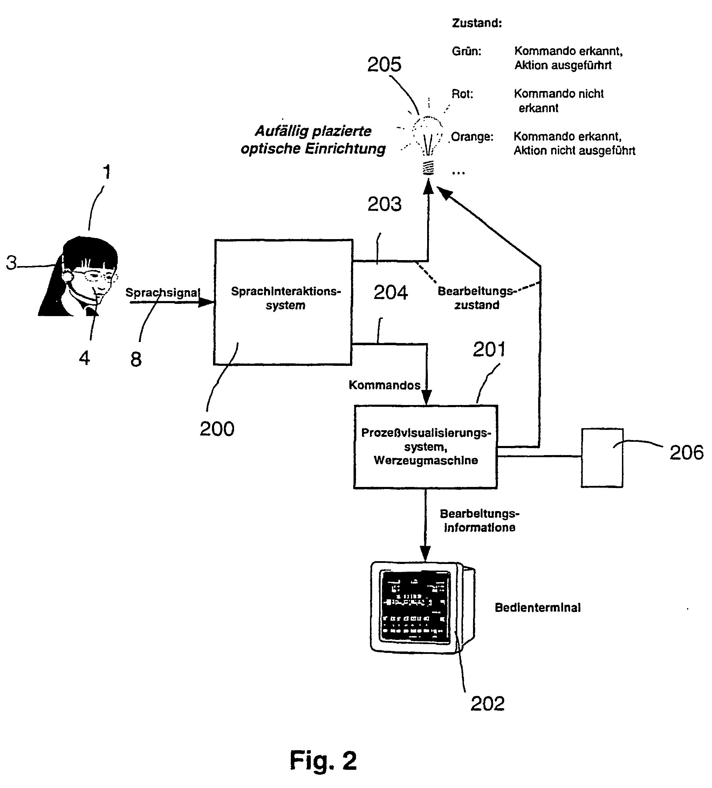

FIG 1 zeigt ein blickfokussiertes Sprachverarbeitungssystem für ein Bedien- und Beobachtungssystem 100, beispielsweise eines Automatisierungssystems. Das Bedien- und Beobachtungssystem enthält ein Prozessvisualisierungssystem 102 das über eine beispielhaft dargestellte Bildschirmmaske 103 eine Steuerung des Prozesses eines Automatisierungssystems ermöglicht. Das Automatisierungssystem ist in FIG 2 aus Gründen der Übersichtlichkeit nicht näher dargestellt. Das Bedien- und Beobachtungssystem umfasst darüber hinaus eine blickfokussierte Spracherkennungseinheit 101, der Eingangssignale 104, 105 zugeführt werden und die Ausgangssignale 106, 107 abgibt. Das Eingangssignal 104 der blickfokussierten Spracherkennungseinheit wird von einer Kamera 5 als Erfassungsmittel zur Erfassung des Blickfokusses 9 eines Anwenders 1 ermittelt. Das Eingangssignal 105 beruht auf einen Sprachsignal 8 des Anwenders, welches beispielsweise über ein Mikrofon 4 eines Head sets 3 des Anwenders 1 erfasst wird. Das blickfokussierte Spracherkennungssystem 101 liefert ein erstes Ausgangssignal 106, welches dem Blickfokus 9 des Anwenders repräsentiert sowie ein zweites Ausgangssignal 107, welches auf dem Sprachsignal 8 des Anwenders basiert. In Abhängigkeit der Ausgangssignale 106, 107 der blickfokussierten Spracherkennungseinheit 1 wird im Prozessvisualisierungssystem 102 ein Ausgangssignal 108 erzeugt, welches in der Bildschirmmaske 103 als dem Blickfokus 9 zugeordneten Bildschirmausschnitt zugeordnetes Softwareobjekt in die Bildschirmmaske 103 eingeblendet wird.

Dem Ausführungsbeispiel von FIG 1 liegt dabei beispielsweise folgendes Szenario zugrunde: Der Anwender 1 beobachtet mit Hilfe des Prozessvisualisierungssystems 102 eine Automatisierungsanlage. Der Blickfokus 9 des Anwenders 1 wird dabei gleichzeitig von dem blickfokussierten Spracherkennungssystem 101 verfolgt. Der Anwender 1 ruft durch Sprache, d.h. durch Abgabe eines Sprachsignals 8 ein gewünschtes Objekt, beispielsweise einen bestimmten Prozesswert, der im Blickfokus 9 enthalten ist auf, oder der Anwender möchten einen im Blickfokus 9 enthaltenen Prozesswert ändern. In diesen Fällen ruft der Anwender 1 das Objekt der Sprache auf oder er nennt den neuen Prozesswert. Unmittelbar an seinen Blickfokus 9 wird ihm daraufhin ein visuelles Objekt 109 eingeblendet, in dem die Informationen über die Verarbeitung seines Sprachkommandos enthalten sind. Bei erfolgreicher Ausführung der Ansteuerungen mit Hilfe des Blickfokusses Spracherkennungssystem 101 führt das Prozessvisualisierungssystem 102 und damit die mit dem Prozessvisualisierungssystem 102 und dem Bedien- und Beobachtungssystem 100 verbundene Anlage die entsprechenden Kommandos und Aktionen aus. Durch den Einsatz des blickfokussierten Spracherkennungssystem gekoppelt mit einen visuellen Feedback-Signal ergibt sich eine leichtere, intuitivere Mensch-Maschine-Interaktion. Der Anwender 1 erhält unmittelbar eine Rückmeldung in Form des kurzzeitigen visuellen Feedback-Signals 109 und ist darüber informiert ob seine Sprachkommandos 105,107 vom System 100 registriert, verstanden und ausgeführt wurden.

FIG 2 zeigt ein weiteres Ausführungsbeispiel eines Bedienund Beobachtungssystem mit Spracherkennung und einem visuellen Feedback-Signal zur Unterstützung von Sprachinteraktion in Prozessvisualisierung und Produktions- sowie Werkzeugmaschinen. Das System besteht aus einem Sprachinteraktionssystem 200, das als Eingangssignal ein Sprachsignal 8 eines Anwenders 1 auswertet. Das Sprachinteraktionssystem 200 liefert in Abhängigkeit des Sprachsignals 8 ein erstes Ausgangssignal 203 sowie ein zweites Ausgangssignal 204. Das erste Ausgangssignal 203 wird einem Anzeigemittel 205 zugeführt, das verschiedene Betriebszustände beispielsweise in Form verschiedener Farbanzeigen ermöglicht. Das zweite Ausgangssignal 204 des Sprachinteraktionssystems 200 wird einem Prozessvisualisierungssystem einer Anlage 206 oder einer Werkzeugmaschine zugeführt. Die Visualisierung und die Bedien- und Beobachtung des der Anlage 206 bzw. der Werkzeugmaschine erfolgt über einen Bedienterminal 202.

Dem in FIG 2 dargestellten System liegt beispielsweise folgendes Szenario zugrunde. Der Anwender, beispielsweise ein Bediener einer Werkzeugmaschine oder einer Anlage 206 beobachtet durch das Prozessvisualisierungssystem 201 über den Bedienterminal 202 die Anlage 206. Um eine Aktion der Anlage/der Maschine 206 auszuführen, ruft der Anwender 1 bei Sprache entsprechende Kommandos in Form von Sprachsignalen 8. Durch die separat angeordnete und vorteilhafter Weise auffällig platzierte Anzeigevorrichtung, beispielsweise in Form einer Lampe wird der Anwender 1 informiert, wie der Zustand der Verarbeitung seines Sprachkommandos ist. So kann beispielsweise ein grünes Signal der Lampe 205 anzeigen, dass ein Kommando erkannt und eine gewünschte Aktion ausgeführt ist. Leuchtet die Signallampe 205 rot, so wird hierdurch signalisiert, dass ein Kommando nicht erkannt wurde. Eine orange Anzeige der Signallampe 205 kann beispielsweise kennzeichnen, dass ein Kommando erkannt, eine dem Kommando zugrundeliegende Aktion jedoch nicht ausgeführt wurde. Die in FIG 3 gezeigte Methode zur Visualisierung eines Feedbacks auf Sprachkommandos für die Prozessbeobachtung eignet sich vor allem im Feld für die Steuerung von Produktions- und Werkzeugmaschinen, da der Anwender, d.h. der Bediener auch über größere Entfernungen eine klare und eindeutige Signalisierung des Verarbeitungszustands seiner Sprachkommandos 8 hat.

Ein möglicher Einsatz eines deutlich auffälligen visuellen Feedbacks zur Unterstützung von Sprachinteraktion in Prozessvisualisierung und Produktions- sowie Werkzeugmaschinen versteht sich insbesondere im speziellen Kontext der Anwendungsfelder "Bedienen und Beobachten von Prozessautomatisierungssystemen" sowie "Produktions- und Werkzeugmaschinen". Der Einsatz von Sprachverarbeitung in der Prozessvisualisierung von technischen Anlagen und Steuerung von Produktions- und Werkzeugmaschinen ermöglicht leichtere, intuitivere Mensch-Maschine-Interaktion.

Da die sprachliche Mensch-Maschine-Interaktion durchaus der natürlichen zwischenmenschlichen Kommunikation ähnelt, wird meistens schnellere Reaktion vom System erwartet, als mit herkömmlichen Interaktionen (Maus, Tasten) der Fall ist. Der Benutzer benötigt unmittelbar eine Rückmeldung, ob seine Sprachkommandos vom System registriert, verstanden und ausgeführt wurden.

Durch ein visuelles Feedback über den Zustand der Verarbeitung der Sprachkommandos kann dies erreicht werden. Mit herkömmlichen Methoden werden diese Art von Feedbacks jedoch immer an einem festen Platz am Bedienterminal plaziert, so daß der Bediener bzw. in seiner eigentlichen Aufgabe eingeschränkte Aufmerksamkeit abgelenkt wird, wenn er danach sucht.

Um die Aufmerksamkeit des Bedieners nicht abzulenken, wird ein deutlich auffälliges visuelles Feedback an ihn gegeben. Bisherige Lösungen sahen lediglich fest plazierte SWtechnisches visuelles Objekt am Bedienterminal vor.

Bei der erfindungsgemäßen Lösung erfolgt ähnlich dem Ablauf zwischenmenschlicher Kommunikation, bei dem ein Mensch immer eine Reaktion von dem Menschen erwartet, den er gerade anspricht, eine Reaktion des Systems. Im Fall eines Dialogs mit dem Computer sollte das Feedback demnach immer dort sein, wo der Benutzer seinen Blick richtet, z.B. an einem Bedienobjekt dargestellt am Terminal. Durch einen "Eye Tracker" kann der Blick des Benutzers am Bildschirm festgestellt werden, genau dort wird entsprechendes Feedback eingeblendet. Diese Methode ist gut geeignet für die Leitebene, wo der Bediener nah an den Terminals den Prozess beobachtet.

Eine andere Methode ist eine im Blickwinkel deutlich plazierte, externe (nicht im Bildschirm) optische Einrichtung für den Zweck des Feedbacks. So kann ein Lampe durch Senden verschiedener Farbsignale den Benutzer informieren, ob seine Kommandos erkannt, verarbeitet und ausgeführt wurden. Diese Methode ist vor allen für Prozessbeobachtung im Feld und für die Steuerung von Produktions- und Werkzeugmaschinen geeignet.

Insgesamt ergibt sich ein deutlich auffälliges visuelles Feedback über den Verarbeitungszustand des Sprachkommandos um die Aufmerksamkeit des Benutzers nicht abzulenken.

Die grundlegende Idee ist in folgenden Szenarien anwendbar: Szenario A (visuelles Feedback genau dort, wo der Bediener seine Aufmerksamkeit richtet): Der Bediener beobachtet durch ein Prozessvisualisierungssystem die Anlage. Sein Blickfokus wird gleichzeitig von einem blickfokussierten Spracherkennungssystem verfolgt.

Um die Details eines bestimmten Objektes anzuschauen, ruft er per Sprache das Objekt auf. Unmittelbar an seinem Blickfokus wird ihm sofort ein visuelles Objekt eingeblendet, in dem die Informationen über die Verarbeitung seiner Sprachkommandos enthalten sind. Das Prozessvisualisierungssystem / die Maschine führt entsprechende Aktionen aus.

Szenario B (visuelles Feedback durch extern plazierte optische Einrichtung): Der Bediener beobachtet durch ein Prozessvisualisierungssystem die Anlage. Um eine Aktion der Maschine auszuführen, ruft er per Sprache entsprechendes Kommando. Durch eine auffällig platzierte Lampe wird er informiert, wie der Zustand der Verarbeitung seiner Sprachkommandos ist, ob entsprechende Aktionen ausgeführt wird. Das Prozessvisualisierungssystem / die Maschine führt entsprechende Aktionen aus.

Zusammenfassend betrifft die Erfindung somit ein System und ein Verfahren zum Bedienen- und Beobachten insbesondere eines Automatisierungssystems und/oder einer Produktions- und/oder Werkzeugmaschine, bei dem das Blickfeld 9 eines Anwenders 1 auf mindestens einem Anzeigemittel 2 erfaßt wird, bei dem eine Sprachinformation 8 des Anwenders 1 zumindest zeitweise ausgewertet wird und bei dem als Reaktion auf den Bearbeitungsstatus bezüglich erkannter Sprachinformation 8 ein visuelles Feedbacksignal generiert wird. Hierdurch ergibt sich eine verbesserte Sprachinteraktion insbesondere im Umfeld von Augmented-Reality-Anwendungen auch bei komplexen technischen Anlagen.

## Patentansprüche

1. System zum Bedienen und Beobachten insbesondere eines Automatisierungssystems und/oder einer Produktions- und/oder Werkzeugmaschine,
• mit Erfassungsmitteln (5) zur Erfassung eines Blickfeldes (9) eines Anwenders (1) auf mindestens einem Anzeigemittel,
• mit Spracherkennungsmitteln (4) zur Erkennung einer Sprachinformation (8) des Anwenders (1) und
• mit Steuerungsmitteln zur Steuerung des Systems und
• mit Mitteln zur Generierung eines visuellen Feedbacksignals als Reaktion auf den Bearbeitungsstatus bezüglich erkannter Sprachinformation (8),
wobei das visuelle Feedbacksignal als im Bereich des detektierten Blickfeldes (9) des Anwenders eingeblendetes Softwareobjekt ausgebildet ist.

2. System nach Anspruch 1,
**dadurch gekennzeichnet,**
**dass** das visuelle Feedbacksignal als den jeweiligen Bearbeitungsstatus bezüglich erkannter Sprachinformation (8) kennzeichnendes Farbsignal ausgebildet ist.

3. System nach einem der Ansprüche 1 oder 2,
**dadurch gekennzeichnet,**
**dass** die Steuerungsmittel das System so ansteuern, dass die Spracherkennungsmittel (4) erst dann aktiviert werden, wenn von den Erfassungsmitteln (5) erfaßt wird, dass das Blickfeld des Anwenders ein bestimmtes Anzeigemittel und/oder zumindest vorgebbare Bereiche des Anzeigemittels betrifft.

4. System nach einem der Ansprüche 1 bis 3,
**dadurch gekennzeichnet,**
**dass** die Erfassungsmittel (5) zur Erfassung des Blickfeldes (9) des Anwenders (1) eine Kamera aufweisen.

5. System nach einem der Ansprüche 1 bis 4,
**dadurch gekennzeichnet, dass** das System akustische Wiedergabemittel (3) aufweist, die zur akustischen Wiedergabe von akustischen Informationsdaten als Reaktion auf vom Anwender (1) gezielt über die Spracherkennungsmittel (4) abgegebene Sprachinformation (8) an die akustischen Wiedergabemittel (3) übermittelt wird.

6. Verfahren zum Bedienen und Beobachten insbesondere eines Automatisierungssystems und/oder einer Produktions- und/oder Werkzeugmaschine, bei dem das Blickfeld (9) eines Anwenders (1) auf mindestens einem Anzeigemittel erfasst wird, bei dem eine Sprachinformation (8) des Anwenders (1) zumindest zeitweise ausgewertet wird und bei dem als Reaktion auf den Bearbeitungsstatus bezüglich erkannter Sprachinformation (8) ein visuelles Feedbacksignal generiert wird, wobei das visuelle Feedbacksignal als im Bereich des detektierten Blickfeldes (9) des Anwenders eingeblendetes Softwareobjekt ausgebildet ist.

7. Verfahren nach Anspruch 6,
**dadurch gekennzeichnet,**
**dass** das visuelle Feedbacksignal als den jeweiligen Bearbeitungsstatus bezüglich erkannter Sprachinformation (8) kennzeichnendes Farbsignal ausgebildet ist.

8. Verfahren nach einem der Ansprüche 7 oder 8,
**dadurch gekennzeichnet,**
**dass** das System so angesteuert wird, dass eine Aktivierung einer Auswertung der Sprachinformation (8) des Anwenders erst dann erfolgt, wenn von den Erfassungsmitteln (5) erfaßt wird, dass das Blickfeld des Anwenders ein bestimmtes Anzeigemittel und/oder zumindest vorgebbare Bereiche des Anzeigemittels betrifft.

9. Verfahren nach einem der Ansprüche 7 bis 9,
**dadurch gekennzeichnet,**
**dass** zur Erfassung des Blickfeldes (9) des Anwenders (1) eine Kamera vorgesehen ist.

10. Verfahren nach einem der Ansprüche 7 bis 10,
**dadurch gekennzeichnet,**
**dass** als Reaktion auf vom Anwender (1) gezielt über die Spracherkennungsmittel (4) abgegebene Sprachinformation (8) akustische Informationsdaten an den Anwender über akustische Wiedergabemittel (3) übermittelt werden.

## Claims

1. System for operating and monitoring in particular an automation system and/or a production machine and/or machine tool,
• with detection means (5) for detecting a visual field (9) of a user being directed onto a display
• with speech recognition means (4) for recognising speech information (8) by the user (1)
• control means for controlling the system, and
• means for generating a visual feedback signal relating to a processing status regarding the speech information (8) detected
the visual feedback signal being configured as a software object faded-in in the region of the detected visual field (9) of the user.

2. System according to Claim 1
**characterised in that**
the visual feedback signal is configured as the colour signal characterising the relevant processing status regarding the speech information (8) detected.

3. System according to Claim 1 or 2
**characterised in that**
the control means control the system such that the speech recognition means (4) are first activated if the detection means (5) detects that the visual field of the user relates to a specific display means and/or at least predefinable areas in the display means.

4. System according to one of Claims 1 to 3
**characterised in that**
the detection means (5) for detecting the visual field (9) of the user (1) have a camera.

5. System according to Claims 1 to 4
**characterised in that**
the system has acoustic feedback means (3), which are transmitted to the acoustic feedback means (3) for the acoustic feedback of acoustic information data as a response to the speech information (8) issued by the user (1) via the speech recognition means (4).

6. Method for operating and monitoring in particular an automation system and/or a production machine and/or machine tool, the visual field (9) of a user (1) being detected on at least one display means, a speech information (8) of the user (1) being at least occasionally evaluated, and a visual feedback signal being generated as a response to the processing status regarding detected speech information (8), the visual feedback signal being configured as a software object superimposed onto the area of the detected visual field (9) of the user.

7. Method according to Claim 6,
**characterised in that**
the visual feedback signal is configured as a colour signal characterising the relevant processing status regarding the detected speech information (8).

8. Method according to one of Claims 7 or 8,
**characterised in that**
the system is controlled such that an activation of an evaluation of the speech information (8) of the user is only carried out if the detection means (5) detect that the visual field of the user relate to a specific display means and/or at least predefinable areas within the display means.

9. Method according to one of the Claims 7 to 9
**characterised in that**
a camera is provided to detect the visual field (9) of the user (1).

10. Method according to one of Claims 7 to 10,
**characterised in that**
acoustic information data is transmitted to the user by means of acoustic feedback means (3), as a response to the speech information (8) given by the user (1) intentionally by means of the speech recognition means (4).

## Revendications

1. Système de commande et d'observation notamment d'un système automatisé et/ou d'une machine de production et/ou d'une machine-outil,
• avec des moyens de détection (5) pour la détection d'un champ visuel (9) d'un utilisateur (1) sur au moins un moyen d'affichage,
• avec des moyens de reconnaissance de la parole (4) pour la reconnaissance d'une information vocale (8) de l'utilisateur (1),
• avec des moyens de commande pour la commande du système, et
• avec des moyens pour la production d'un signal de retour visuel en réaction au statut de traitement suite à la reconnaissance de l'information vocale (8),
le signal de retour visuel étant conçu comme un objet logiciel inséré dans la zone du champ visuel détecté (9) de l'utilisateur.

2. Système selon la revendication 1,
**caractérisé par le fait que** le signal de retour visuel est conçu comme un signal de couleur caractérisant le statut de traitement respectif suite à la reconnaissance de l'information vocale (8).

3. Système selon l'une des revendications 1 ou 2,
**caractérisé par le fait que** les moyens de commande commandent le système de telle sorte que les moyens de reconnaissance de la parole (4) ne sont activés que si les moyens de détection (5) ont détecté que le champ visuel de l'utilisateur concerne un certain moyen d'affichage et/ou au moins des zones pouvant être prescrites du moyen d'affichage.

4. Système selon l'une des revendications 1 à 3,
**caractérisé par le fait que** les moyens de détection (5) pour la détection du champ visuel (9) de l'utilisateur (1) comportent une caméra.

5. Système selon l'une des revendications 1 à 4,
**caractérisé par le fait que** le système comporte des moyens de reproduction sonore (3) qui sont destinés à la reproduction sonore de données informationnelles sonores en réaction à une information vocale (8) fournie par l'utilisateur (1) via les moyens de reconnaissance de la parole (4).

6. Procédé de commande et d'observation notamment d'un système automatisé et/ou d'une machine de production et/ou d'une machine-outil, dans lequel on détecte le champ visuel (9) d'un utilisateur (1) sur au moins un moyen d'affichage, dans lequel on évalue une information vocale (8) de l'utilisateur (1) au moins par moments et dans lequel on produit un signal de retour visuel en réaction au statut de traitement suite à la reconnaissance de l'information vocale (8), le signal de retour visuel étant conçu comme un objet logiciel inséré dans la zone du champ visuel détecté (9) de l'utilisateur.

7. Procédé selon la revendication 6,
**caractérisé par le fait que** le signal de retour visuel est conçu comme un signal de couleur caractérisant le statut de traitement respectif suite à la reconnaissance de l'information vocale (8).

8. Procédé selon l'une des revendications 7 ou 8,
**caractérisé par le fait que** le système est commandé de telle sorte qu'une activation d'une évaluation de l'information vocale (8) de l'utilisateur ne s'effectue que si les moyens de détection (5) ont détecté que le champ visuel de l'utilisateur concerne un certain moyen d'affichage et/ou au moins des zones pouvant être prescrites du moyen d'affichage.

9. Procédé selon l'une des revendications 7 à 9,
**caractérisé par le fait qu'**une caméra est prévue pour la détection du champ visuel (9) de l'utilisateur (1).

10. Procédé selon l'une des revendications 7 à 10,
**caractérisé par le fait que**, en réaction à une information vocale (8) fournie par l'utilisateur (1) via les moyens de reconnaissance de la parole (4), des données informationnelles sonores sont transmises à l'utilisateur par l'intermédiaire de moyens de reproduction sonore (3).
